# EUROPÄISCHE PATENTSCHRIFT

(11) **EP 3 070 028 B1**
(45) Veröffentlichungstag und Bekanntmachung des Hinweises auf die Patenterteilung: **07.04.2021**
(21) Anmeldenummer: 16000357.0
(22) Anmeldetag: 12.02.2016
(51) Int. Cl.: B65G 15/16, B65G 47/64, B65G 15/42, B65G 23/06, B65G 15/50

(54) **VORRICHTUNG ZUM TRANSPORT VON QUADERFÖRMIGE PACKUNGEN**
DEVICE FOR TRANSPORTING RECTANGULAR PACKAGES
DISPOSITIF DE TRANSPORT D'EMBALLAGES RECTANGULAIRES

(30) Priorität: 06.03.2015 DE 102015002798
(43) Veröffentlichungstag der Anmeldung: 21.09.2016
(73) Patentinhaber: Focke & Co. (GmbH & Co. KG), 27283 Verden (DE)
(72) Erfinder: Schmidt, Jens, 28879 Grasberg (DE); Wilkens, Lars, 28195 Bremen (DE)
(74) Vertreter: Ellberg, Nils

(56) Entgegenhaltungen:
- EP-A1- 1 719 706
- DE-A1- 10 027 799
- DE-B- 1 134 027
- GB-A- 969 429
- JP-A- S60 188 216
- JP-U- H0 312 820
- US-A- 3 486 606
- US-A- 3 921 791
- US-A- 3 932 982
- US-A- 4 810 153

## Beschreibung

Die Erfindung betrifft Maßnahmen zur Handhabung von quaderförmigen Packungen mit den Merkmalen des Oberbegriffs des Anspruchs 1.

Vorzugsweise geht es um fördertechnische Maßnahmen für quaderförmige (Zigaretten-)Packungen des Typs Klappschachtel, die - vorzugsweise im Anschluss an eine Einrichtung zum Anbringen einer äußeren Folienumhüllung der Packungen - entlang Transportbahnen gefördert und schließlich unter Bildung von Packungsreihen bzw. Packungsgruppen gesammelt werden. Bei der vorliegenden Erfindung geht es generell um den Transport der Gegenstände bzw. Packungen entlang bogenförmiger, insbesondere kreisbogenförmiger Förderbahnen.

Im Fokus steht eine Fördereinrichtung mit einer Umlenkung der Packung entlang einer teilkreisförmigen, insbesondere (etwa) halbkreisförmigen oder viertelkreisförmigen Bewegungsbahn. Die Packungen werden dabei auf einer Förderbahn einem Umlenkorgan zugeführt und nach Verlassen desselben im Wesentlichen in abweichender, insbesondere in rechtwinkliger oder in entgegengesetzter Richtung weitertransportiert, wie beispielsweise bei der Vorrichtung gemäß DE 100 27 799 A1. Dort wird ein Endlosgurt für den Transport von Packungen um ein Umlenkrad bzw. eine Umlenkwalze herumgeführt.

An der radial außenliegenden Seite ist im Bereich der Umlenkung eine feststehende Führung für die Packungen, nämlich eine entsprechend kreisförmig geformte Platte angeordnet, an deren Innenseite die Packungen entlang gleiten. Weiterhin ist die Möglichkeit vorgesehen, aus einem Nachlegeturm Packungen nach Bedarf in den abfördernden Packungsstrom einzuführen.

In der US 3,921,791 werden einzelne Zigaretten entlang einer Umlenkwalze transportiert. Dabei werden sie an der radial außenliegenden Seite von zwei Förderbändern gefördert, die mit einer Längskante in Nuten der Umlenkwalze geführt werden.

Die US 4,810,153 offenbart eine Vorrichtung nach dem Oberbegriff des Anspruchs 1, insbesondere zeigt das Dokument ein Förderband, das zu transportierende Kartonbögen an einer Außenseite entlang einer Umlenkwalze führen kann. Es kann um eine Achse verschwenkt werden, so dass die Kartonbögen nicht über die Umlenkwalze geführt, sondern entlang des Förderbands in die gleiche Richtung weitergefördert werden. Der Erfindung liegt die Aufgabe zugrunde, die Handhabung der Packungen oder dergleichen zu verbessern, insbesondere im Bereich der Umlenkung, derart, dass hinsichtlich mechanischer Beanspruchung und hinsichtlich der Leistungsfähigkeit eine verbesserte Förder- bzw. Umlenkeinrichtung geschaffen ist.

Zur Lösung dieser Aufgabe ist die erfindungsgemäße Vorrichtung nach Anspruch 1 vorgeschlagen.

Der Transport der Packungen im Umlenkbereich erfolgt durch vorzugsweise glattflächige Gurte, nämlich mindestens ein Innengurt und ein Außengurt, wobei die Gurte im Umlenkbereich an vorzugsweise mitlaufenden Stütz- bzw. Anlageflächen anliegen, sodass die aus der Ablenkung der Gurte entstehenden Kräfte von den festen Anlageflächen aufgenommen werden. Die Packungen bleiben insoweit druckfrei.

Die Anlageflächen für den Innengurt und zwei in radialem Abstand voneinander angeordneten Außengurten sind vorzugsweise an einem gemeinsamen Umlenkorgan, insbesondere an einer angetriebenen Umlenkwalze bzw. Antriebswalze angebracht. Die (Innen- und Außen-)Gurte werden demnach von einem gemeinsamen Organ umgelenkt und zugleich in Förderrichtung angetrieben, wobei die Umlenk- bzw. Antriebswalze die ringförmigen Anlageflächen in radial und vorzugsweise axial versetzten Ebenen bildet. Insbesondere wird eine etwa mittige Anlagefläche für den Innengurt gebildet, und zwar durch die Außenfläche einer Innenwalze. Die Anlageflächen für die vorzugsweise zwei Außengurte sind im Bereich von Außenscheiben der Antriebswalze gebildet, ebenfalls mit kreisförmigen Anlageflächen. Die Abstände der Anlageflächen entsprechen den Abmessungen der Packungen in Radialrichtung. Diese werden bei quaderförmiger Gestaltung vorzugsweise so transportiert, dass die großflächigen Packungsseiten - Vorderseite, Rückseite - radial nach innen und außen gerichtet sind. Die Außengurte liegen mit einem Teilbereich der Querabmessung bzw. Breite, nämlich mit einem Förderstreifen an einem Bereich der Außenseite der Packungen an - insbesondere benachbart zu den seitlichen Flächen (Stirnfläche, Bodenfläche). Ein anderer Bereich der Gurte, nämlich ein Antriebsstreifen, erhält Anlage an den Anlageflächen der Außenscheiben der Antriebswalze. Die Gurte liegen demnach weitgehend drucklos an den zu transportierenden Packungen an.

Während des Betriebs können Gegenstände bzw. Packungen in den Strom der transportierten Packungen eingeschleust werden. Zu diesem Zweck werden (äußere) Führungs- bzw. Förderorgane verstellt, derart, dass (zeitweilig) die Zufuhr von Packungen zum Umlenkaggregat und/oder der Transport im Bereich desselben unterbrochen und dafür an der Austrittsseite des Umlenkaggregats eine Transportbahn für die Zufuhr bzw. Einschleusung von Packungen frei wird.

Weitere Merkmale und Besonderheiten der Erfindung werden nachfolgend anhand der Zeichnungen näher erläutert. Es zeigt:
- Fig. 1: eine Gesamtanlage für die Anbringung von Außenumhüllungen an Packungen und für den Abtransport der fertigen Packungen in perspektivischer Ansicht,
- Fig. 2: eine Einzelheit der Vorrichtung gemäß Fig. 1, nämlich ein Umlenkaggregat in einem Vertikalschnitt der Schnittebene II-II in Fig. 1, bei vergrößertem Maßstab,
- Fig. 3: einen Quer- bzw. Radialschnitt III-III des Umlenkaggregats gemäß Fig. 2, in nochmals vergrößertem Maßstab,
- Fig. 4: einen Ausschnitt IV der Einzelheit gemäß Fig. 3, in weiter vergrößertem Maßstab,
- Fig. 5: einen Querschnitt V-V zu der Einzelheit gemäß Fig. 4, nochmals vergrößert,
- Fig. 6: einen Querschnitt VI-VI der Einzelheit gemäß Fig. 4, ebenfalls vergrößert,
- Fig. 7: die Vorrichtung gemäß Fig. 2 bei veränderter Relativstellung von Organen,
- Fig. 8: einen Quer- bzw. Radialschnitt VIII-VIII der Vorrichtung gemäß Fig. 7, in vergrößertem Maßstab,
- Fig. 9: eine Ausführung eines Umlenkaggregats in einem 90°-Bereich in Seitenansicht, teilweise geschnitten,
- Fig. 10: eine Einzelheit der Fig. 9 in der Schnittebene X-X in vergrößertem Maßstab.
Bei den gezeigten Ausführungsbeispielen geht es um den Transport bzw. die Handhabung von quaderförmigen Gegenständen, insbesondere von (Zigaretten-)Packungen 10. Bei dem Beispiel handelt es sich um Hartpackungen, insbesondere um Klappschachteln, die von einer (großflächigen) Vorderseite 11, einer entsprechenden großflächigen Rückseite 12, schmalen Seitenflächen 13, 14 sowie Stirnfläche 15 und Bodenfläche 16 begrenzt sind.

Die Packungen 10 sind vorzugsweise komplett fertiggestellt, also mit einer Außenumhüllung aus Folie versehen. Diese kann in einem vorgeordneten Packer angebracht worden sein, nämlich in einem Folienpacker 17. Die dort fertiggestellten Packungen 10 werden auf einem Förderer abgelegt, insbesondere einem Gurtförderer in der Funktion als Zuförderer 18, der die Packungen 10 im Anschluss an den Folienpacker 17 zu einem Umlenkaggregat 19 transportiert. Von diesem werden die Packungen 10 nach Umlenkung auf einem Abförderer 20 abgelegt, der vorzugsweise in einer zum Zuförderer 18 entgegengesetzten Richtung die Packungen 10 zu einer Sammelstation bzw. Staustation 21 transportiert. Dort werden die in gleichen oder unregelmäßigen Abständen ankommenden Packungen 10 unter Bildung von Dichtreihen nebeneinanderliegender Packungen 10 aufgestaut.

Eine Besonderheit sind Aufbau und Arbeitsweise des Umlenkaggregats 19. Dieses ist so ausgebildet, dass die ankommenden Packungen 10 entlang einer halbkreisförmigen Bahn transportiert werden. Im Ergebnis werden die Packungen 10 in einer Richtung entgegen der Förderrichtung des Zuförderers 18 durch den Abförderer 20 transportiert. Beide Endlosförderer 18, 20 sind mindestens im Bereich des Umlenkaggregats 19 mit einer Unterstützung versehen, vorliegend mit einer unterhalb eines Fördertrums angeordneten Stützplatte 22, 23.

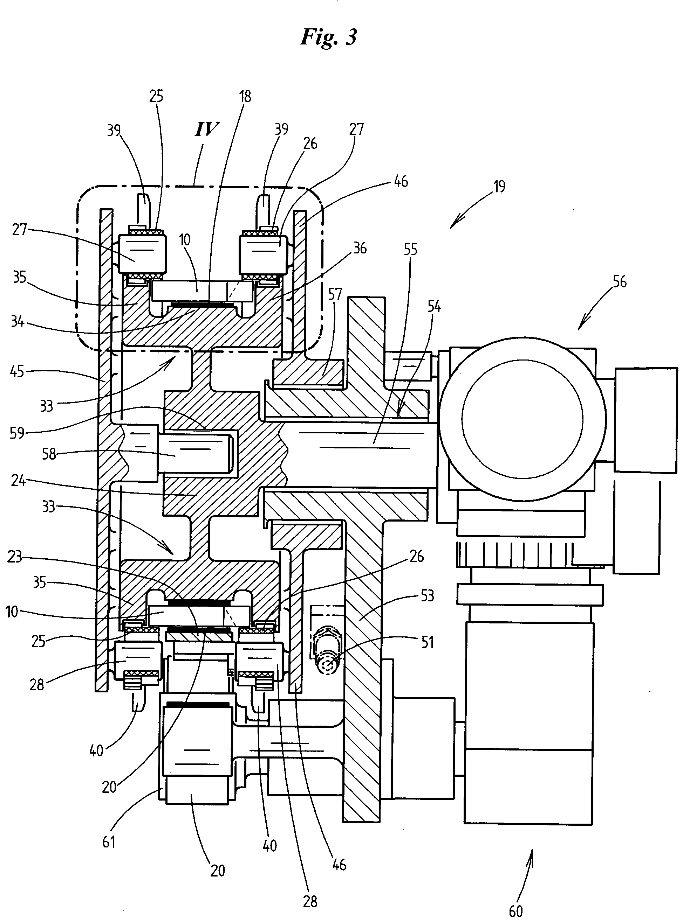

Die Besonderheit des Umlenkaggregats 19 besteht darin, dass die Packungen 10 während des Transports entlang der bogen- bzw. kreisförmigen Bewegungsbahn an zwei einander gegenüberliegenden Seiten durch mitlaufende Stützorgane bzw. Förderer reibungs- bzw. schlupffrei transportiert werden bis zur Übergabe an den Abförderer 20. Die Packungen 10 sind an der radial innenliegenden Seite durch einen innenliegenden Förderer, nämlich Gurt mitgenommen. Dieser ist hier die Fortsetzung des Zuförderers 18, der als Endlosgurt um eine angetriebene zentrale Umlenkwalze 24 geführt ist. Die Packungen 10 ihrerseits liegen vorzugsweise mit einer großflächigen Packungsseite, vorliegend mit der Vorderseite 11 der als Klappschachtel ausgebildeten Packung 10 an dem Innengurt bzw. Abförderer 20 an (Fig. 3). Der Gurt 20 ist mit (deutlich) geringerer Breite ausgebildet als die Längsabmessung der quergerichteten Packungen 10. Diese liegen mittig ausgerichtet auf dem Zuförderer 18.

Als radial außenliegender Gegen- bzw. Mitförderer ist ein vorliegend ebenfalls endloser Außenförderer bzw. Außengurt 25, 26 vorgesehen. Dieser erstreckt sich im Bereich des Umlenkaggregats 19 im Wesentlichen über den (halbkreisförmigen) Umlenkbereich des Aggregats 19. Der Außengurt 25, 26 liegt an der radial nach außen gerichteten Packungsfläche, vorliegend an der Rückseite 12 an. Die Gurte 20, 25, 26 sind so angetrieben, dass die Packungen 10 schlupffrei transportiert werden. Der Außengurt 25, 26 ist über Umlenkrollen 27, 28 geführt, die jeweils Anfang und Ende eines Fördertrums des Gurts 25, 26 bestimmen. Die Umlenkrollen 27, 28 sind oberhalb bzw. unterhalb der Umlenkwalze 24 gelagert und bilden die Einlaufseite (Umlenkrolle 27) einerseits und die Austrittsseite (Umlenkrolle 28) andererseits für die Packungen 10. Weitere Umlenkrollen 29 für einen Rücklauftrum des Außengurts 25, 26 bewirken einen störungsfreien Lauf des Außengurts 25, 26.

Eine Besonderheit besteht darin, dass an der radialen Außenseite zwei Außengurte 25, 26 wirksam sind, die in einem axialen Abstand voneinander angeordnet sind, derart, dass ein bogenförmiger Fördertrum jeweils an Randbereichen der radial außenliegenden Packungsfläche - Rückseite 12 - anliegt, also zum einen benachbart zur Stirnfläche 15 und zum anderen benachbart zur Bodenfläche 16. Die Außengurte 25, 26 sind demnach hinsichtlich der Anlage an den Packungen 10 versetzt zum Innengurt bzw. Zuförderer 18.

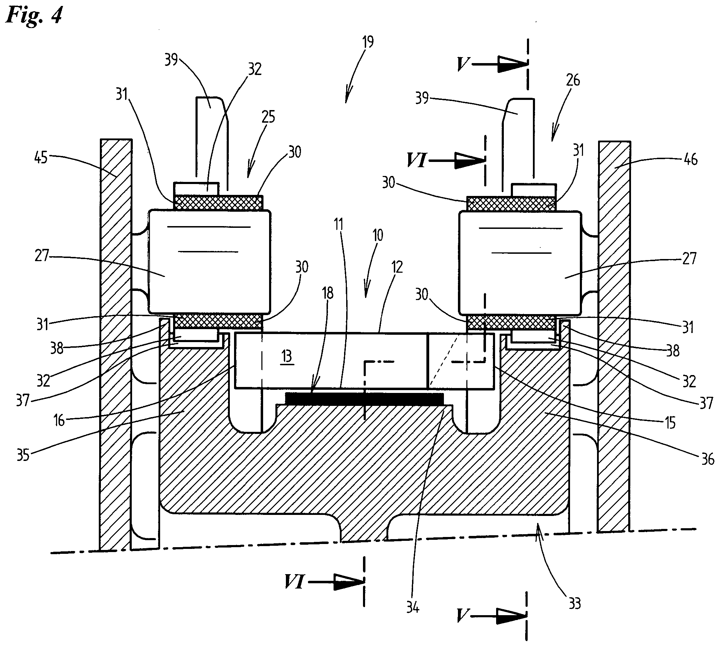

Die Außengurte 25, 26 sind in besonderer Weise ausgebildet und angeordnet. Sie liegen nur mit einem Teilbereich der Querabmessung, nämlich mit einem Förderstreifen 30, an der Packung 10 an (Fig. 4). Ein weiterer Teilbereich der Gurte 25, 26 ist als Antriebsstreifen 31 ausgebildet, vorliegend in der Ausführung als Zahnriemen mit querabstehenden Zähnen 32, die sich etwa über die halbe Breite des Gurts 25, 26 erstrecken. Der Antriebsstreifen 31 erhält Anlage an einem der Form der Bahn für den Transport der Packungen entsprechenden Antriebsorgan, vorliegend an einem kreisförmigen Antriebsorgan. Ein wichtiger Effekt besteht darin, dass dadurch die Außengurte 25, 26 auch im Bereich der Anlage an der Packung 10, also im Bereich des Förderstreifens 30, eine stabile runde, insbesondere halbkreisförmige Kontur geschaffen ist, sodass dieser Teil der Außengurte 25, 26 weitgehend spannungsfrei an den Packungen 10 anliegt.

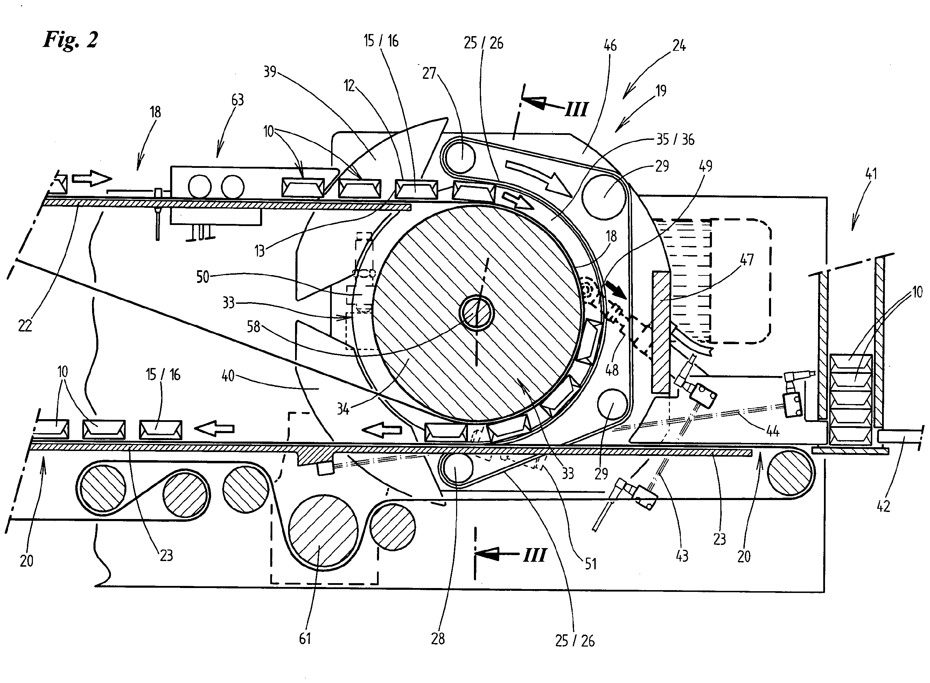

Der Antriebsstreifen 31 der Gurte 25, 26 wird durch ein (kreisförmiges) Antriebsorgan gestützt und im Sinne des Antriebs bewegt. Das Antriebsorgan ist Teil eines zentralen, vorzugsweise gemeinsamen Antriebsrades bzw. einer Antriebswalze 33. Diese bewirkt den Antrieb sowohl des Innengurts bzw. des Zuförderers 18 wie auch der Außengurte 25, 26. Die Antriebswalze 33 ist als komplexer Formkörper ausgebildet mit einem vorzugsweise mittigen Innen-Antriebsteil bzw. einer Innenwalze 34. Diese ist als ringsherumlaufender, radial nach außen gerichteter Vorsprung ausgebildet, an dessen äußerer, zylindrischer Fläche der Zuförderer 18 als Innenförderer anliegt. Der endlose Gurt 18 umgibt die Innenwalze 34 entlang eines Umlenkwinkels von 180° oder etwas mehr (Fig. 2).

Zu beiden Seiten der Innenwalze 34 sind Anlage- bzw. Förderbereiche für die Außengurte 25, 26 gebildet. Es handelt sich dabei um Außensegmente bzw. Außenscheiben 35, 36, an deren radial gerichteter Außenfläche jeweils ein Außengurt 25, 26 anliegt. Die Außenscheiben 35, 36 sind im Anlagebereich der Gurte 25, 26 mit einer geringeren Breite ausgebildet als diese, sodass die Gurte 25, 26 auf der axial nach innen gerichteten bzw. auf der der Packung 10 zugekehrten Seite einen Überstand bilden, der als Förderstreifen 30 wirkt und an der Außenseite der jeweiligen Packung 10 anliegt. Die radial außenliegende Randfläche der Außenscheiben 35, 36 ist mit Gegenzähnen 37 versehen. Diese sind in Eingriff mit den Zähnen 32 bzw. dem Zahnriemen des Antriebsstreifens 31 der Gurte 25, 26 und übertragen aufgrund der Drehbewegung der Antriebswalze 33 die Förderbewegung auf die Außengurte 25, 26. Neben den durch die Gegenzähne 37 gebildeten Zahnrädern im Bereich der Außenscheiben 35, 36 befindet sich ein Führungssteg 38, der einen Gleichlauf der Gurte 25, 26 bewirkt. Alternativ kann (auch) der Innenförderer, also der Zuförderer 18, als Zahnriemen ausgebildet sein. Die Umlenkrollen 27, 28, 29 der Außengurte 25, 26 sind vorzugsweise als leerlaufende Rollen gelagert.

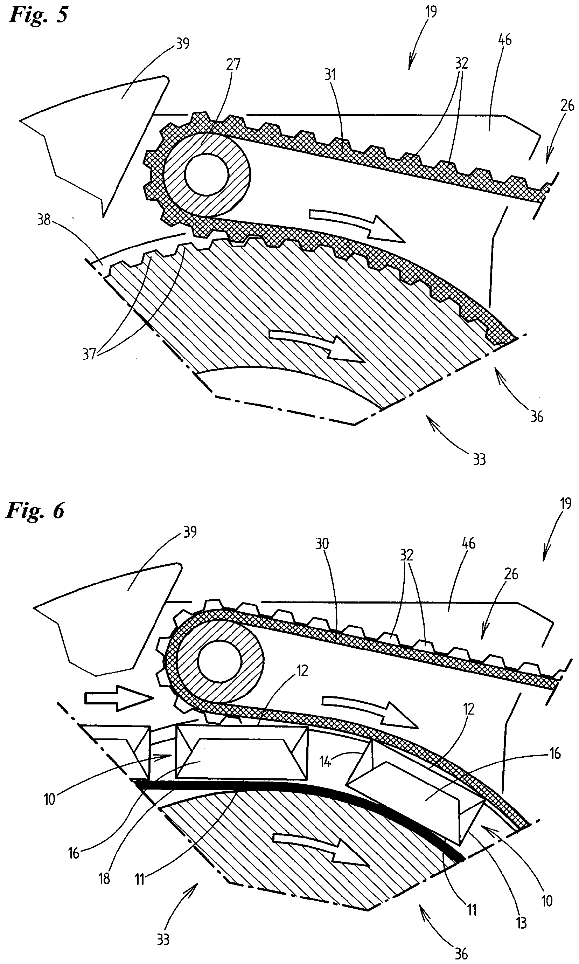

Die Förder- bzw. Anlagebereiche für die an unterschiedlichen Seiten der Packungen 10 wirkenden Gurte 18 einerseits und 25, 26 andererseits entsprechen der Abmessung der Packungen 10. Dies hat zur Folge, dass durch das gemeinsame Antriebsorgan - Antriebswalze 33 - aufgrund der Relativstellung die Gurte 18, 25 und 26 in abgestimmter Fördergeschwindigkeit angetrieben werden, sodass eine schlupffreie Förderbewegung für die Packungen 10 im Bereich des Umlenkaggregats 19 gegeben ist. Die vorzugsweise aus weichem, elastischen Werkstoff bestehenden Außengurte 25, 26 liegen aufgrund der gerundeten Führung mit dem der Packung 10 zugekehrten Förderstreifen 30 an Packungskanten an, vorliegend an von der frei liegenden Rückseite 12 sowie den Seitenflächen 13, 14 begrenzten Längskanten der Packungen 10 (Fig. 6). Radial gegenüberliegend erhält der Förderer 18 Anlage an einem mittleren Bereich der nach innen gerichteten Vorderseite 11 der Packung 10.

Fig. 2 zeigt die Standardposition des Umlenkaggregats 19, bei der die auf dem Zuförderer 18 - in gleichen oder unterschiedlichen Abständen - zugeführten Packungen 10 unter Umlenkung auf dem Abförderer 20 abgelegt werden. Dabei ergibt sich aufgrund der geometrischen Umstände eine Dreh- bzw. Wendebewegung, sodass die beispielsweise mit der Vorderseite 11 auf dem Zuförderer 18 liegenden Packungen 10 im Bereich des Abförderers 20 mit der gegenüberliegenden Rückseite 12 auf dem Gurt liegen.

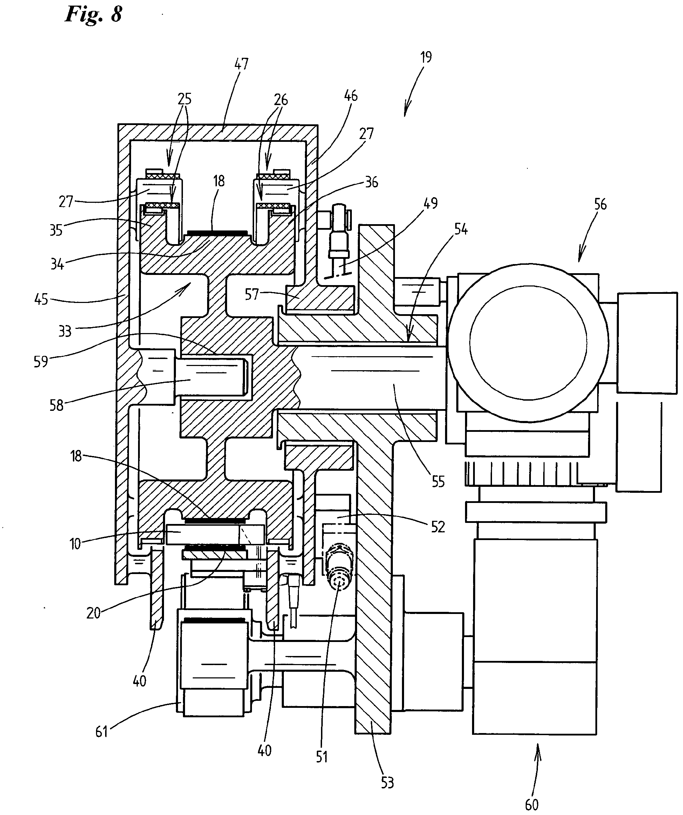

Die Außengurte 25, 26 sind so angeordnet, dass deren Innen- bzw. Fördertrum im Wesentlichen tangential in die Ebene des Abförderers 20 führt, sodass die Packungen 10 ruckfrei übergeben werden (Fig. 3). Der vorzugsweise als Einzel-Gurt ausgebildete Abförderer 20 ist hinsichtlich der Gurtbreite so bemessen, dass die im Abstand voneinander angeordneten Außengurte 25, 26 zu beiden Seiten des Abförderers 20 verlaufen (Fig. 3, Fig. 8), sodass die Packungen 10 in einer fortlaufenden Transportbewegung von dem Umlenkaggregat 19 an den Abförderer 20 übergeben werden. Vorzugsweise ist die untere, endseitige Umlenkwalze 28 (unmittelbar) unterhalb der Transportebene des Abförderers 20 (Fördertrum) angeordnet, sodass eine stufenfreie Übergabe der Packungen 10 gewährleistet ist.

Der Zuförderer 18 wird nach Verlassen der Antriebswalze 33 bzw. der Innenwalze 34 unter einem Winkel in Aufwärtsrichtung als Rücklauftrum geführt, sodass die Packungen 10 im Austrittsbereich des Umlenkaggregats 19 unmittelbar frei kommen.

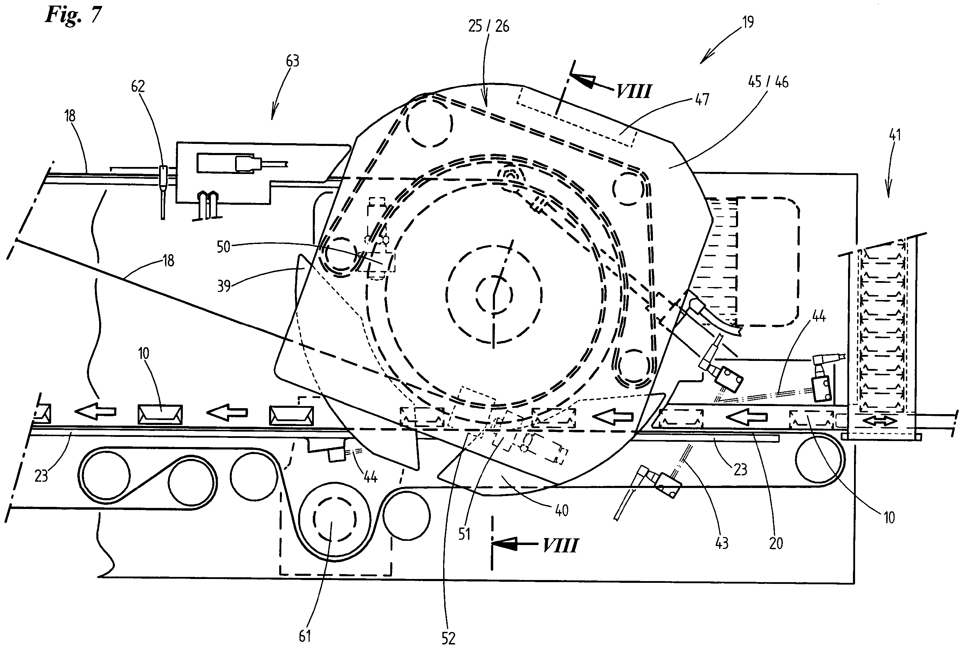

Die exakte Relativstellung der Packungen 10 im Bereich des Umlenkaggregats 19, insbesondere im eintrittsseitigen und austrittsseitigen Bereich, ist durch - obere und untere - Seitenführungen 39, 40 gesichert. Es handelt sich dabei um plattenförmige Organe, die in einem etwa den Abmessungen einer Packung 10 entsprechenden Abstand voneinander angeordnet sind, sodass die Führung insbesondere auf Stirnfläche 15 und Bodenfläche 16 wirkt. Die plattenförmigen Seitenführungen 39, 40 sind segmentartig ausgebildet und folgen der Rundung des Umlenkaggregats 19. Weiterhin sind die Seitenführungen 39, 40 mit dem Tragwerk der Außenführung - Gurte 25, 26 - verbunden, vorliegend mit den Tragscheiben 45, 46, werden also in ihrer Relativstellung mit den Tragscheiben 45, 46 verändert. Die Seitenführungen 39, 40 erfüllen ihre Funktion demnach auch in der Nachlegestellung (Fig. 7).

Das Umlenkaggregat 19 ist durch Drehbewegung in unterschiedliche Arbeitspositionen verstellbar, nämlich zwischen einer Umlenkstellung und einer Einschleusestellung. Bei der letztgenannten Position geht es insbesondere um die Zuführung von (Ergänzungs-)Packungen 10 an der Austrittsseite des Umlenkaggregats 19, also im Bereich des Abförderers 20. Dieser ist mit einem (oberen) Fördertrum über das Umlenkaggregat 19 hinaus verlängert bis zu einem Packungsvorrat, hier in der Ausführung eines Nachlegeturms 41. Aus unterschiedlichen Gründen werden Packungen 10 aus dem Nachlegeturm 41 in den Abförderprozess eingeführt, und zwar durch Ablage auf dem Abförderer 20. Der Nachlegeturm 41 ist im unteren Bereich mit einer Ausschuböffnung versehen. Ein Schieber 42 fördert durch Ausschubbewegung Packungen 10 nacheinander aus dem Nachlegeturm 41 auf den Abförderer 20. Die Zuführung der Packungen 10 wird über einen Sensor kontrolliert, vorliegend über eine Lichtschranke 43.

Das Umlenkaggregat 19 bzw. Teile desselben sind aus der Arbeits- bzw. Umlenkstellung gemäß Fig. 2 durch Drehbewegung in die Einschleuse- bzw. Nachlegestellung gemäß Fig. 7, Fig. 8 bewegbar. Im Vordergrund steht dabei eine Stellbewegung für die Außengurte 25, 26. Diese werden einschließlich der Umlenkrollen 27, 28, 29 in die Nachlegestellung bewegt, sodass die (untere) Umlenkrolle 28 (mit Gurt 25, 26) den Weg für die Zuführung der Nachlegepackungen 10 frei gibt (Fig. 7). Die korrekte Freigabe der Bewegungsbahn hinsichtlich der Außengurte 25, 26 wird vorzugsweise ebenfalls von Sensoren überprüft, hier durch eine (weitere) Lichtschranke 44.

Die Außenführung des Umlenkaggregats 19, also die Außengurte 25, 26 samt Umlenkrollen 27, 28, 29, ist bzw. sind an verstellbaren Trägern gelagert, die die Alternativstellungen gewährleisten. Die Umlenkrollen 27, 28, 29 für die Außengurte sind an verstellbaren Tragscheiben 45, 46 gelagert, jeweils an der Innenseite derselben. Die beiden seitlichen Tragscheiben 45, 46 sind zu einem gemeinsamen Tragwerk miteinander verbunden, vorliegend durch mindestens ein quergerichtetes, randseitiges Verbindungsstück 47. Die Tragscheiben 45, 46 bzw. das gemeinsame Tragwerk 45, 46, 47 ist um eine zentrale Drehachse - entsprechend der Drehachse der Antriebswalze 33 - längs eines Winkels hin- und herbewegbar, und zwar durch ein Betätigungsorgan, vorliegend in der Ausführung als Stellzylinder 48, der zweckmäßigerweise pneumatisch betrieben wird. Eine Schubstange 49 des Stellzylinders 48 ist mit einer Tragscheibe 46 verbunden (Fig. 8). Die Endstellungen der Schubstange 49 sind in Fig. 2 einerseits und Fig. 7 andererseits dargestellt. Vorteilhafterweise sind diese Endstellungen durch Anschläge begrenzt, vorliegend durch entsprechend positionierte Stoßdämpfer 50, 51. An diesen kommt zum Beispiel ein an der Tragscheibe 46 angebrachter Anschlag 52 zur Anlage.

Das Umlenkaggregat 19 ist hinsichtlich der Relativstellung und Lagerung der einzelnen Organe besonders ausgebildet. Ein Hauptträger in der Ausführung einer Tragplatte 53 - in aufrechter Ebene - ist mit einem Maschinengestell (nicht gezeigt) verbunden bzw. Teil desselben. Die Tragplatte 53 bildet ein Drehlager bzw. Hauptlager 54 für eine mit der Antriebswalze 33 verbundenen Welle 55. Diese überträgt den Drehantrieb auf die Antriebswalze 33. Die Welle 55 wird vorliegend durch einen seitlich neben dem Umlenkaggregat 19 positionierten Motor 56 angetrieben.

Die Trageinheit für die Umlenkrollen 27, 28, 29, also die Tragscheiben 45, 46, sind konzentrisch zur Antriebswalze 33 drehbar - relativ zur Antriebswalze 33 - gelagert. Die der Tragplatte 53 zugekehrte Tragscheibe 46 ist mit einer Nabe 57 drehbar auf dem entsprechend verlängerten Hauptlager 54 bzw. einer zylindrischen Lagerhülse gelagert. Die gegenüberliegende Tragscheibe 45 ist drehbar mit der Antriebswalze 33 verbunden, und zwar über einen Drehzapfen 58, der in einer taschenförmigen (mittigen) Vertiefung 59 der Antriebswalze 33 drehbar gelagert ist.

Die Tragplatte 53 ist als langgestrecktes Tragorgan ausgebildet und dient zur Lagerung einer Mehrzahl von Umlenkwalzen, insbesondere für den Abförderer 20. Dieser ist durch einen Motor 60 antreibbar, der auf ein Antriebsrad 61 des Abförderers 20 wirkt.

An der Eintrittsseite des Umlenkaggregats 19, und zwar im Bereich des Zuförderers 18, ist eine weitere Lichtschranke 62 angeordnet zur Überwachung der Zufuhr von Packungen 10 zum Umlenkaggregat 19. Weiterhin befindet sich in diesem Bereich eine Sperre bzw. eine Packungsbremse 63. Diese hat insbesondere die Aufgabe, die Zufuhr von Packungen 10 zum Umlenkaggregat 19 (zeitweilig) zu unterbrechen, nämlich während der Einführung von Packungen 10 aus dem Nachlegeturm 41, also wenn die verstellbare, äußere Umlenkeinheit in die Einschleusestellung gemäß Fig. 7 bewegt ist, in der die Gurte 25, 26 den Eingangsbereich des Umlenkaggregats 19 versperren.

Die Verstellbarkeit der Außenführung des Umlenkaggregats 19 - vorliegend die Außengurte 25, 26 - zwischen Umlenkstellung und Stellung zum Einschleusen von Packungen aus einem Vorrat, kann auch bei Umlenkaggregaten eingesetzt werden, bei denen aufgrund der entsprechenden Struktur der transportierten Gegenstände eine während der Umlenkbewegung feststehende, Gleitflächen aufweisende Außenführung verwendet wird.

Aufgrund der (gleitfreien) Zwangsführung der Packungen 10 kann das Umlenkaggregat 19 auch in entgegengesetzter Richtung eingesetzt werden, also mit einer Aufwärtsbewegung der Packungen 10 im Bereich der Umlenkung. Bei diesem Modus wirkt der Abförderer bei entsprechender Umgestaltung als Zuförderer für die Packungen, während an der oberen Seite die Packungen 10 aus dem Umlenkaggregat 19 austreten und auf einem Gurt - entsprechend Zuförderer 18 - abgelegt werden. Auch die Organe für die Alternativstellungen - Umlenkstellung, Einschleusestellung - werden entsprechend in umgekehrter Richtung betätigt.

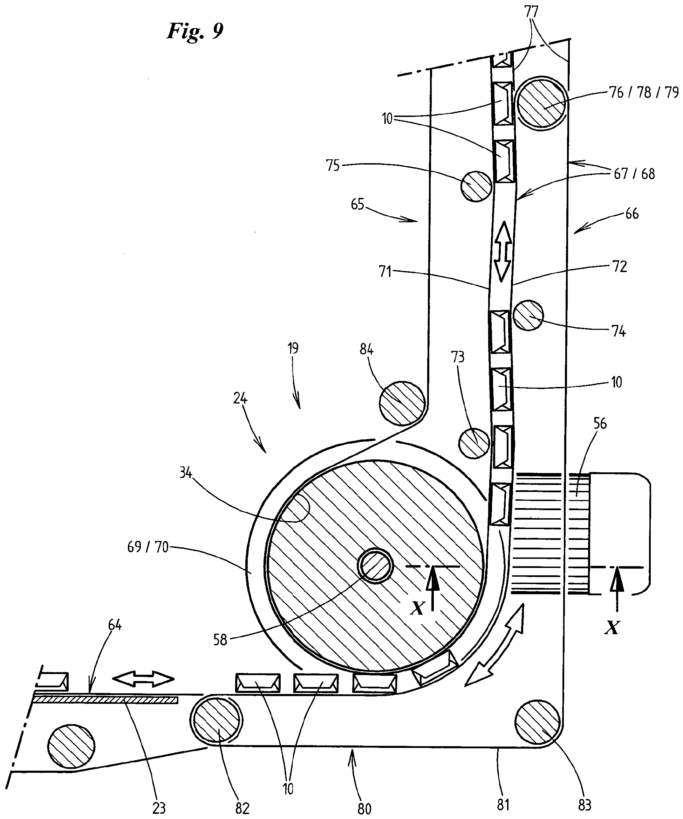

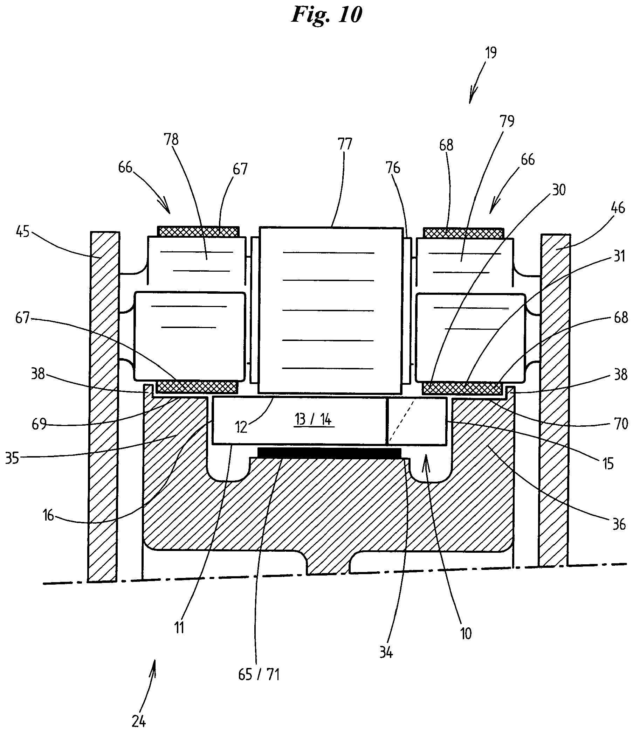

Die vorliegende Technologie ermöglicht die Umlenkung von Gegenständen bzw. Packungen 10 in einem Bereich unterhalb 180°. Vorteilhaft ist eine Ausführung gemäß Fig. 9, Fig. 10 mit einer 90°-Umlenkung. Die Anordnung ist so getroffen, dass ein horizontaler Förderstrang in einen aufrechten bzw. vertikalen Förderstrang umgelenkt wird. Der Transport der Packungen 10 kann aufgrund der Funktion des Aggregats alternativ von der horizontalen Förderstrecke in die vertikale oder umgekehrt von der vertikalen Förderstrecke in die horizontale ausgeführt werden.

Der horizontale Förderstrang besteht vorzugsweise aus einem Endlosgurt bzw. einem Horizontalgurt 64 - analog zum Gurt des Abförderers 20. Der Gurt 64 ist vorzugsweise so ausgebildet, dass die Packungen frei auf einem Ober- bzw. Fördertrum liegen. Unterhalb desselben befindet sich zweckmäßigerweise eine Stützplatte 23.

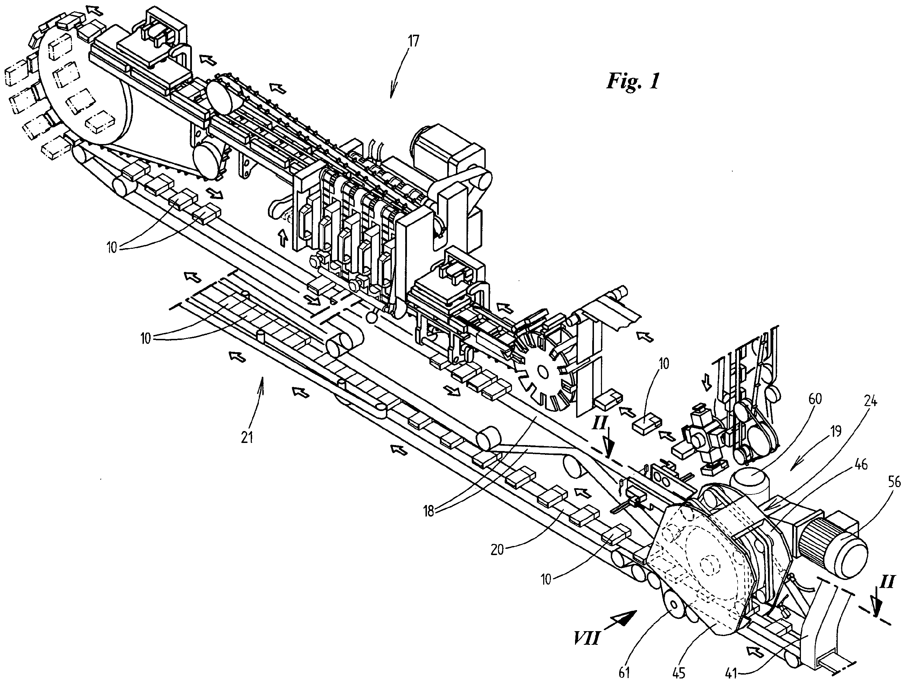

Der aufrechte Förderstrang besteht vorzugsweise aus zwei zusammenwirkenden Fördergurten, zwischen deren Fördertrumen die Packungen 10 vorzugsweise unter (Klemm-)Spannung fixiert sind. Vorzugsweise sind die Gurte des aufrechten Förderstrangs zugleich Teile eines Umlenkaggregats 19, welches im Prinzip der Arbeitsweise des Umlenkaggregats 19 gemäß Fig. 1 bis Fig. 8 entspricht. Ein Gurtförderer des aufrechten Förderstrangs ist zugleich Innengurt 65 - in der Funktion analog zum Zuförderer 18 des vorangehenden Beispiels. Der mit diesem Innengurt 65 zusammenwirkende Gurt des Vertikalstrangs ist zugleich Außengurt 66 und besteht - analog zum vorstehenden Beispiel - aus zwei Teilgurten 67, 68.

Das Umlenkaggregat 19 mit einer Umlenkwalze 24 in gleicher bzw. analoger Weise wie die Umlenkwalze gemäß Fig. 3, Fig. 4 weist in Axialrichtung und vorzugsweise in Radialrichtung versetzte Ebenen für die Anlage der Gurte 65 und 66 auf, nämlich derart, dass Innengurt 65 und Außengurt 66 in Radialrichtung einen etwa der relevanten Abmessung der Packung 10 entsprechenden Abstand voneinander haben. Vorzugsweise erhalten die Gurte 65, 66 Anlage an Vorderseite 11 und Rückseite 12 der (quergerichteten) Packung 10, so dass die Querabmessung der Packung 10 den radialen Abstand der Gurte 65, 66 bestimmt.

Die Umlenkwalze 24, die zugleich Antriebswalze 33 ist, weist eine ringförmige Innenfläche für den Innengurt 65 auf, vorzugsweise eine Innenwalze 34, also eine zylindrische Anlagefläche. Diese liegt etwa mittig zwischen äußeren Anlageflächen für den Außengurt 66 bzw. für dessen Teilgurte 67, 68, nämlich zwischen Außenscheiben 35, 36. Diese bilden vorzugsweise zueinander ausgerichtete Anlageflächen für die Teilgurte 67, 68, nämlich Umlenkflächen 69, 70, vorzugsweise glattflächig bei entsprechender Ausbildung der Gurte 67, 68. Die Umlenkflächen 69, 70 sind seitlich durch die Führungsstege 38 begrenzt.

Die Teilgurte 67, 68 liegen, wie beschrieben, an radial außenliegenden Flächen der Packungen 10 an, insbesondere an der Rückseite 12. Die Anordnung ist so getroffen, dass die beiden Gurte 67, 68 an in Axialrichtung randseitigen Flächenbereichen der Rückseite 12 erfassen, nämlich benachbart zur Stirnfläche 15 einerseits und zur Bodenfläche 16 andererseits. Der betreffende Anlagebereich des Gurts 67, 68 ist der Förderstreifen 30 des oben beschriebenen Ausführungsbeispiels. Der vorzugsweise breitere Streifen der Anlage an den Umlenkflächen 69, 70 ist der Antriebsstreifen 31.

Der Innengurt 65 erstreckt sich im Bereich zwischen den (seitlichen) Teilgurten 67, 68, und zwar derart, dass der Gurt 65 an der radial innenliegenden Fläche der Packung 10 liegt, insbesondere an der Vorderseite 11, und zwar vorzugsweise mittig. Die Packung wird dadurch stabil an den einander gegenüberliegenden Flächen erfasst und transportiert, jeweils mit tangentialem Anschluss an die betroffenen Umfangsflächen der Umlenkwalze 24.

Innengurt 65 und Außengurt 66 bilden Fördertrume 71, 72 mindestens im Bereich des Förderstrangs. Die in gleicher Richtung und mit derselben Geschwindigkeit angetriebenen Fördertrume 71, 72 erfassen die Packungen 10 mindestens während des Vertikaltransports an den freiliegenden Flächen.

Die Packungen 10 werden unter Aufrechterhaltung einer gewissen Andrückkraft bzw. Klemmwirkung zwischen den Fördertrumen 71, 72 transportiert. Hierfür sind (ortsfeste) Ablenkorgane vorgesehen, die abwechselnd auf das eine Trum 71 und das andere Trum72 einwirken. Vorliegend sind Ablenkwalzen 73, 74, 75 versetzt neben den Gurten bzw. Trumen 71, 72 drehbar gelagert, und zwar derart, dass im Bereich dieser Walzen 73, 74, 75 eine geringfügige Ablenkung des beaufschlagten Gurts gegeben ist.

Der Außengurt 66 erstreckt sich vorzugsweise bis in den Bereich einer Umlenkwalze 76. Hier schließt an den Außengurt 66 ein üblicher Gurt an zur Bildung eines Packungsförderers 77. Dieser kann Zuförderer oder Abförderer sein, je nach Förderrichtung der Packungen 10. Die Packungen 10 werden demnach ab der Umlenkwalze 76 oder bis zur Umlenkwalze 76 zwischen den beiden Teilgurten 67, 68 des Außengurts 66 gefördert. Diese werden im Bereich von Teilrollen 78, 79 umgelenkt, die mit der Umlenkwalze 76 für den Packungsförderer 77 auf derselben Drehachse gelagert sind (Fig. 10). Es findet dadurch eine stufenlose Übergabe der Packungen 10 in der einen oder anderen Förderrichtung statt.

Am gegenüberliegenden (unteren) Endbereich des Außengurts 66 erstreckt sich dieser im Wesentlichen längs eines Viertelkreises um die Umlenkwalze 24 und bildet eine Fortsetzung als Horizontalschenkel 80 im Anschluss an die Umlenkwalze 24. In diesem Bereich bilden die Teilgurte 67, 68 freie Gurtförderer, auf deren Obertrum die Packungen 10 zur Übergabe an den Horizontalförderer 64 aufliegen (oder zum Empfang der von dem Horizontalförderer 64 zugeführten Packungen 10). Ein Rücklauftrum 81 des Außengurts 66 führt von einer gemeinsamen Umlenkwalze 82 über eine Eckwalze 83 in den aufrechten Förderstrang.

Der Innengurt 65 ist so ausgebildet, dass die Trume desselben über den Umlenkbereich durch die Umlenkwalze 76 hinaus verlängert sind in den Bereich des Packungsförderers 77. Ablenkwalzen 73 und 75 sind dem Fördertrum 71 des Innengurts 65 zugeordnet, vorzugsweise mit gleichen Abständen von der gegenüberliegenden Ablenkwalze 74. Eine Stützwalze 84 für den Rücklauftrum des Innengurts 65 ist so angeordnet, dass eine Umschlingung der Umlenkwalze 24 von mehr als 180°, nämlich vorzugsweise von fast 270° geschaffen ist.

### Bezugszeichenliste:

| | | | |
|---|---|---|---|
| 10 | Packung | 48 | Stellzylinder |
| 11 | Vorderseite | 49 | Schubstange |
| 12 | Rückseite | 50 | Stoßdämpfer |
| 13 | Seitenfläche | 51 | Stoßdämpfer |
| 14 | Seitenfläche | 52 | Anschlag |
| 15 | Stirnfläche | 53 | Tragplatte |
| 16 | Bodenfläche | 54 | Hauptlager |
| 17 | Folienpacker | 55 | Welle |
| 18 | Zuförderer | 56 | Motor |
| 19 | Umlenkaggregat | 57 | Nabe |
| 20 | Abförderer | 58 | Drehzapfen |
| 21 | Staustation | 59 | Vertiefung |
| 22 | Stützplatte | 60 | Motor |
| 23 | Stützplatte | 61 | Antriebsrad |
| 24 | Umlenkwalze | 62 | Lichtschranke |
| 25 | Außengurt | 63 | Packungsbremse |
| 26 | Außengurt | 64 | Horizontalgurt |
| 27 | Umlenkrolle | 65 | Innengurt |
| 28 | Umlenkrolle | 66 | Außengurt |
| 29 | Umlenkrolle | 67 | Teilgurt |
| 30 | Förderstreifen | 68 | Teilgurt |
| 31 | Antriebsstreifen | 69 | Umlenkfläche |
| 32 | Zahn | 70 | Umlenkfläche |
| 33 | Antriebswalze | 71 | Fördertrum |
| 34 | Innenwalze | 72 | Fördertrum |
| 35 | Außenscheibe | 73 | Ablenkwalze |
| 36 | Außenscheibe | 74 | Ablenkwalze |
| 37 | Gegenzahn | 75 | Ablenkwalze |
| 38 | Führungssteg | 76 | Umlenkwalze |
| 39 | Seitenführung | 77 | Packungsförderer |
| 40 | Seitenführung | 78 | Teilrolle |
| 41 | Nachlegeturm | 79 | Teilrolle |
| 42 | Schieber | 80 | Horizontalschenkel |
| 43 | Lichtschranke | 81 | Rücklauftrum |
| 44 | Lichtschranke | 82 | Umlenkwalze |
| 45 | Tragscheibe | 83 | Eckwalze |
| 46 | Tragscheibe | 84 | Stützwalze |
| 47 | Verbindungsstück | | |

## Patentansprüche

1. Vorrichtung zum Transport von quaderförmigen Packungen (10) für Zigaretten entlang einer bogenförmigen Bewegungsbahn, wobei die Vorrichtung ein Umlenkaggregat (19) zum Umlenken der transportierten Packungen (10) entlang einer teilkreisförmigen, insbesondere halbkreisförmigen oder viertelkreisförmigen, Bewegungsbahn umfasst, und wobei die Vorrichtung eine Antriebswalze (33) umfasst, wobei die Packungen (10) wenigstens im Bereich der Umlenkung von einem am Umfang der Antriebswalze (33) anliegenden Innengurt (18, 65) an einer radial innenliegenden Fläche der Packung (10) und von einem Außengurt (25, 26; 66) an einer radial außenliegenden Fläche der Packung (10) für den Transport erfasst sind, und wobei der Innengurt (18, 65) einerseits und der Außengurt (25, 26; 66) andererseits im Bereich der Umlenkung an insbesondere kreis- oder teilkreisförmigen Stütz- bzw. Anlageflächen (34; 35, 36; 69, 70) anliegen, und wobei die Stützflächen (34) für den Innengurt (18, 65) einerseits und die Anlageflächen (35, 36; 69, 70) für den Außengurt (25, 26; 66) andererseits in Radialrichtung versetzt zueinander angeordnet sind, nämlich entsprechend den Abmessungen der Packungen (10) in Radialrichtung, und wobei der Innengurt (18, 65) an einer radial innenliegenden Fläche der Packung (10) anliegt und der Außengurt (25, 26; 66) mindestens mit einem Förderstreifen (30) als freiem Teilbereich an einer radial außenliegenden Fläche der Packung (10) anliegt, **dadurch gekennzeichnet, dass** der Außengurt (25, 26; 66) aus zwei in axialem Abstand voneinander angeordneten Außengurten (25, 26; 67, 68) besteht, dass die Außengurte (25, 26) als Außenführung des Umlenkaggregats (19) zwischen einer Umlenkstellung, in der Packungen (10) entlang der bogenförmigen Bewegungsbahn umlenkbar sind und einer Einschleusestellung, in der Packungen (10) aus einem Nachlegeturm (41) als Packungsvorrat in den Transportprozess einschleusbar sind, verstellbar, nämlich in Drehrichtung hin- und herbewegbar sind, derart, dass in der Einschleusestellung die Außengurte (25, 26) aus einem Übergabebereich der Packungen (10) an einen Abförderer (20) herausbewegt und die Packungen (10) aus dem Nachlegeturm (41) frei an dem Umlenkaggregat (19) vorbeibewegbar sind, und dass ein Traggestell für die Außengurte (25, 26) mit Tragscheiben (45, 46) und Verbindungsstück (47) als Einheit konzentrisch zur Antriebswalze (33) drehbar gelagert ist, wobei die Tragscheiben (45, 46) unabhängig von der Antriebswalze (33) drehbar sind.

2. Vorrichtung nach Anspruch 1, **dadurch gekennzeichnet, dass** die Stütz- bzw. Anlageflächen für Innengurt (18, 65) und Außengurte (25, 26; 66) als Umfangsflächen von drehend angetriebenen Förderern ausgebildet sind, insbesondere als Umfangsflächen einer gemeinsamen Antriebswalze (33).

3. Vorrichtung nach Anspruch 1 oder 2, **dadurch gekennzeichnet, dass** die als Umlenkorgan dienende, vorzugsweise gemeinsame Antriebswalze (33), sowohl in Axialrichtung als auch in Radialrichtung versetzt zueinander angeordneten Stütz- bzw. Anlageflächen für Innengurt (18, 65) und Außengurte (25, 26; 66) aufweist, insbesondere eine Innenwalze (34) mit einer vorzugsweise etwa mittigen Anlagefläche für den Innengurt (18, 65) und mit in Axialrichtung versetzt liegenden Außenscheiben (35, 36; 69, 70) mit Anlageflächen für die Außengurte (25, 26; 67, 68), wobei vorzugsweise jeder Außenscheibe (35, 36; 69, 70) ein Gurt (25, 26; 67, 68) zugeordnet ist.

4. Vorrichtung nach Anspruch 3 oder einem der weiteren vorhergehenden Ansprüche, **dadurch gekennzeichnet, dass** die Außengurte (25, 26) mit Teilbereichen an den Anlageflächen der Außenscheiben (35, 36; 69, 70) anliegen und mit über die Anlageflächen hinwegstehenden, nämlich mit einem Förderstreifen (30) an einem vorzugsweise end- bzw. randseitigen Bereich der radial außenliegenden Fläche der Packung (10) anliegen und mit einem Antriebsstreifen (31) an der zugeordneten Außenscheibe (35, 36; 69, 70) anliegen.

5. Vorrichtung nach Anspruch 1 oder einem der weiteren vorhergehenden Ansprüche, **dadurch gekennzeichnet, dass** quaderförmige Zigarettenpackungen, insbesondere des Typs Klappschachtel, quer zur Förderrichtung orientiert sind, derart, dass Stirnfläche (15) und Bodenfläche (16) seitwärts gerichtet und großflächige Packungsseiten, insbesondere Vorderseite (11) und Rückseite (12) an Innengurt (18, 65) und Außengurten (25, 26; 66) als Förderorganen anliegen, insbesondere derart, dass die Vorderseite (11) am Innengurt (18, 65) und die Rückseite (12) an den Außengurten (25, 26; 66) anliegt, insbesondere mit der Stirnfläche (15) einerseits und der Bodenfläche (16) andererseits zugekehrten Randbereichen an den Gurten (25, 26; 67, 68).

6. Vorrichtung nach Anspruch 1 oder einem der weiteren vorhergehenden Ansprüche, **gekennzeichnet durch** folgende Merkmale:
a) die Umlenkung der Förderbahn für die Packungen (10) ist geringer als 180°, beträgt insbesondere 90°,
b) eine horizontale Förderstrecke für die Packungen (10) ist durch das Umlenkaggregat (19) in eine vertikale bzw. aufrechte Förderstrecke umgelenkt,
c) innenliegende Förderorgane umschlingen das Umlenkaggregat (19) bzw. die Umlenkwalze (24) in einem Bereich der vorzugsweise größer ist als 180°, derart, dass ein Fördertrum (71) des Innengurts (65) als Förderorgan für die Packungen (10) in aufrechter Richtung wirkt,
d) ein außenwirkendes Förderorgan, insbesondere ein Außengurt (66) mit zwei im Abstand voneinander angeordneten Teilgurten (67, 68), bildet einen Horizontalschenkel (80) im Bereich des Umlenkaggregats (19) und eine an das Umlenkaggregat (19) bzw. an die Umlenkwalze (24) anschließende vertikale Förderstrecke, wobei Fördertrume des Außengurts (66) bzw. der Teilgurte (67, 68) einerseits und der Fördertrum (71) andererseits im Bereich der vertikalen Förderstrecke in einem der Abmessung der Packungen (10) entsprechenden Abstand voneinander geführt sind, derart, dass die Fördertrume (71, 72) vorzugsweise unter Spannung an den Packungen (10) anliegen.

7. Vorrichtung nach Anspruch 6 oder einem der weiteren vorhergehenden Ansprüche, **dadurch gekennzeichnet, dass** ein vertikaler bzw. aufrechter Förderstrang mindestens des Außengurts (66) im Bereich einer Umlenkwalze, vorzugsweise mit Teilrollen (78, 79) für jeden Teilgurt (67, 68) des Außengurts (66) endet und dass vorzugsweise der Innengurt (65) über den Bereich der Umlenkung des Außengurts (66) hinaus verlängert ist und vorzugsweise mit einem (aufrechten) Packungsförderer (77) zusammenwirkt, der im Bereich der Umlenkung, insbesondere mittels einer Umlenkwalze (76), an den Außengurt (66) anschließt.

8. Vorrichtung nach Anspruch 1 oder einem der weiteren vorhergehenden Ansprüche, **dadurch gekennzeichnet, dass** die Außenführung des Umlenkaggregats (19), insbesondere die Umlenkrollen (27, 28, 29) der Außengurte (25) an einem vorzugsweise gemeinsamen Traggestell angeordnet sind, wobei vorzugsweise die Umlenkrollen (27, 28, 29) innenseitig an beidseits außen angeordneten Tragscheiben gelagert sind, nämlich an Außenscheiben (35, 36), die vorzugsweise gemeinsam zwischen Umlenkstellung und Einschleusestellung bewegbar sind, insbesondere durch einen Stellzylinder (48).

9. Vorrichtung nach Anspruch 1 oder einem der weiteren vorhergehenden Ansprüche, **dadurch gekennzeichnet, dass** die Außengurte (25, 26) des Umlenkaggregats (19) für die Einschleusestellung derart durch Drehbewegung vorzugsweise im Gegenuhrzeigersinn verstellbar ist, derart, dass die Außengurte (25, 26) vollständig aus dem Förderbereich des Abförderers (20) herausbewegt sind, wobei insbesondere die Umlenkrolle (28) mit Abstand oberhalb der Bewegungsbahn der Packungen (10) auf dem Abförderer (20) positioniert ist.

10. Vorrichtung nach Anspruch 1 oder einem der weiteren vorhergehenden Ansprüche, **dadurch gekennzeichnet, dass** die jeweiligen Endstellungen der Außengurte (25, 26) in der Umlenkstellung einerseits und der Einschleusestellung andererseits durch Anschläge bestimmt sind, vorzugsweise durch ortsfeste Stoßdämpfer (50, 51), an denen jeweils ein mit den Außengurten (25, 26) bzw. dem Traggestell (45, 46, 47) verbundener Anschlag (52) Anlage erhält.

11. Vorrichtung nach Anspruch 1 oder einem der weiteren vorhergehenden Ansprüche, **gekennzeichnet durch** ein maschinenseitiges Tragorgan für das Umlenkaggregat (19), insbesondere eine Tragplatte (53), das ein Hauptlager (54) für eine Antriebswelle (55) der Antriebswalze (33) aufweist, wobei das Traggestell (45, 46, 47) für die Außenführung mit einem drehbaren Tragteil, insbesondere einer Nabe (57) drehbar mit der Tragplatte (53), verbunden ist, insbesondere im Bereich einer zylindrischen Lagerhülse des Hauptlagers (54), wobei vorzugsweise das Traggestell für die Außenführung drehbar mit der Antriebswalze (33) bzw. der Antriebswelle (55) verbunden ist, vorzugsweise derart, dass ein an der (außenliegenden) Tragscheibe (45) angebrachter Drehzapfen (58) in eine mittige Vertiefung (59) der Antriebswalze (33) drehbar eintritt.

12. Vorrichtung nach Anspruch 1 oder einem der weiteren vorhergehenden Ansprüche, **gekennzeichnet durch** Steuerorgane mindestens an der Eintrittsseite des Umlenkaggregats (19) zur gesteuerten Übergabe von Packungen (10) an dieses, vorzugsweise mit einer zu beiden Seiten der Bewegungsbahn der Packungen (10) angeordneten Packungsbremse (63) zum zeitweiligen Anhalten der durch den Zuförderer (18) transportierten Packungen (10), vorzugsweise vor Eintritt in den Bereich des Umlenkaggregats.

13. Vorrichtung nach Anspruch 1 oder einem der weiteren vorhergehenden Ansprüche, **gekennzeichnet durch** seitliche Führungsorgane für die Packungen (10) im Bereich des Umlenkaggregats (19), insbesondere in der Ausführung als segmentartige, plattenförmige Seitenführungen (39, 40) im Eintritts- und/oder im Austrittsbereich des Umlenkaggregats (19), wobei die vorzugsweise zu beiden Seiten der Bewegungsbahn der Packungen (10) angeordneten Seitenführungen (39, 40) mit dem Traggestell für die Außenführung verbunden und mit diesen verstellbar sind.

## Claims

1. An apparatus for transporting cuboid-shaped packs for cigarettes along an arcuate path of movement, wherein the apparatus comprises a deflection subassembly (19) for deflecting the transported packs (10) along a path of movement which describes a segment of a circle, in particular which is semi-circular or quarter-circular, and wherein the apparatus comprises a drive roll (33), wherein the packs (10), at least in the region of deflection, are gripped for the transport by an inner belt (18, 65), which abuts the circumference of the drive roll (33), at a radially inner surface of the pack (10) and by an outer belt (25, 26; 66) at a radially outer surface of the pack (10), and wherein, in the region of deflection, the inner belt (18, 65), on one hand, and the outer belt (25, 26; 66), on the other hand, abut on respective support and abutment surfaces (34; 35, 36; 69, 70) that are in particular circular or partially circular in shape, and wherein the support surfaces (34) for the inner belt (18, 65), on one hand, and the abutment surfaces (35, 36; 69, 70) for the outer belt (25, 26; 66), on the other hand, are arranged offset to one another in the radial direction, namely in accordance with the dimensions of the packs (10) in the radial direction, and wherein the inner belt (18, 65) abuts on a radially inner surface of the pack (10) and the outer belt (25, 26; 66) abuts at least with a conveyor strip (30) as a free subarea on a radially outer surface of the pack (10), **characterized in that** the outer belt (25, 26; 66) comprises two outer belts (25, 26; 67, 68) arranged at an axial distance from one another, that the outer belts (25, 26) as an outer guide of the deflection subassembly (19) can be adjusted between a deflection position, in which the packs (10) can be deflected along an arcuate path of movement, and an infeed position, in which packs (10) from a resupply stack (41) can be fed into the transport process as reserve packs, namely they can be moved back and forth in the rotational direction such that, in the infeed position, the outer belts (25, 26) are moved out of the transfer region of the packs (10) to a discharge conveyor (20) and the packs (10) from the resupply stack (41) can be moved freely past the deflection subassembly (19), and **in that** a supporting frame for the outer belts (25, 26) having support discs (45, 46) and a connecting piece (47) is rotatably mounted as a unit concentrically with respect to the drive roll (33), wherein the support discs (45, 46) can be rotated independent of the drive roll (33).

2. The apparatus as claimed in claim 1, **characterized in that** the respective support and abutment surfaces for the inner belt (18, 65) and outer belts (25, 26; 66) are configured as circumferential surfaces of rotary driven conveyors, in particular as circumferential surfaces of a common drive roll (33).

3. The apparatus as claimed in claim 1 or 2, **characterized in that** the preferably common drive roll (33) serving as a deflection member has the respective support and abutment surfaces for inner belt (18, 65) and outer belts (25, 26; 66), said surfaces being offset to one another in the axial direction as well as in the radial direction, in particular an inner roller (34) with a preferably approximately centred abutment surface for the inner belt (18, 65) and with outer discs (35, 36; 69, 70) offset in the axial direction with abutment surfaces for the outer belts (25, 26; 67, 68), wherein preferably each outer disc (35, 36; 69, 70) is assigned a belt (25, 26; 67, 68).

4. The apparatus as claimed in claim 3 or one of the further preceding claims, **characterized in that** the outer belts (25, 26) abut with subareas on the abutment surfaces of the outer discs (35, 36; 69, 70) and abut with a portion that projects beyond the abutment surfaces, namely with a conveying strip (30), on a preferably end or edge region of the radially outer surface of the pack (10), and abut with a drive strip (31) on the associated outer disc (35, 36; 69, 70).

5. The apparatus as claimed in claim 1 or one of the further preceding claims, **characterized in that** cuboid-shaped cigarette packs, in particular those of the hinge-lid type, are oriented transversely to the conveying direction such that end surface (15) and base surface (16) are directed laterally and large-surface pack sides, in particular front side (11) and rear side, (12) abut against the inner belt (18, 65) and outer belts (25, 26; 66) as conveying members, in particular such that the front side (11) abuts on the inner belt (18, 65) and the rear side (12) abuts on the outer belts (25, 26; 66), in particular with edge regions facing the end surface (15), on one hand, and the base surface (16), on the other hand, abutting the belts (25, 26; 67, 68).

6. The apparatus as claimed in claim 1 or one of the further preceding claims, **characterized by** the following features:
a) the deflection of the conveying path for the packs (10) is less than 180°, in particular 90°,
b) a horizontal conveying section for the packs (10) is deflected by the deflection subassembly (19) into a vertical or upright conveying section,
c) inner conveying members wind around the deflection subassembly (19) or the deflection roll (24) in a region that is preferably greater than 180° in such a manner that a conveyor strand (71) of the inner belt (65) acts as a conveying member for the packs (10) in the upright direction,
d) an outer conveying member, in particular an outer belt (66) having two spaced-apart sub-belts (67, 68), forms a horizontal arm (80) in the region of the deflection subassembly (19) and a vertical conveying section following the deflection subassembly (19) or the deflection roll (24), wherein conveyor strands of the outer belt (66) or sub-belts (67, 68) on one hand, and the conveyor strand (71), on the other hand, are guided in the region of the vertical conveying section at a distance from one another that corresponds to the dimension of the packs (10) in such a manner that the conveyor strands (71, 72) abut the packs (10) preferably under tension.

7. The apparatus as claimed in claim 6 or one of the further preceding claims, **characterized in that** a vertical or upright conveyor strand of at least the outer belt (66) ends in the region of a deflection roller, preferably with sub-rollers (78, 79) for each sub-belt (67, 68) of the outer belt (66) and **in that** the inner belt (65) is preferably extended beyond the deflection region of the outer belt (66) and preferably interacts with an (upright) pack conveyor (77) which is connected, in particular by means of a deflection roller (76), to the outer belt (66) in the region of deflection.

8. The apparatus as claimed in claim 1 or one of the further preceding claims, **characterized in that** the outer guide of the deflection subassembly (19), in particular the deflection rollers (27, 28, 29) of the outer belts (25) are arranged on a preferably common supporting frame, wherein the deflection rollers (27, 28, 29) are preferably mounted on the inner side of outer support discs arranged on both sides, namely on outer discs (35, 36), which can preferably be moved in common between the deflection position and the infeed position, in particular by means of a positioning cylinder (48).

9. The apparatus as claimed in claim 1 or one of the further preceding claims, **characterized in that** the outer belts (25, 26) of the deflection subassembly (19) can be adjusted in such a manner for the infeed position by rotational movement, preferably in a counter clockwise direction, such that the outer belts (25, 26) are moved completely out of the conveying region of the discharge conveyor (20), wherein in particular the deflection roller (28) is positioned at a distance above the path of movement of the packs (10) on the discharge conveyor (20).

10. The apparatus as claimed in claim 1 or one of the further preceding claims, **characterized in that** the respective end positions of the outer belts (25, 26) in the deflection position, on one hand, and the infeed position, on the other, are determined by stops, preferably by fixed shock absorbers (50, 51), which in each case are abutted by a stop (52) connected to the outer belts (25, 26) or to the supporting frame (45, 46, 47).

11. The apparatus as claimed in claim 1 or one of the preceding further claims, **characterized by** a machine-side support member for the deflection subassembly (19), in particular a bearing plate (53), which has a main bearing (54) for a drive shaft (55) of the drive roll (33), wherein the supporting frame (45, 46, 47) for the outer guide is rotatably connected with a rotatable bearing component, in particular a hub (57), to the bearing plate (53), in particular in the region of a cylindrical bearing sleeve of the main bearing (54), wherein preferably the supporting frame for the outer guide is rotatably connected to the drive roll (33) or to the drive shaft (55), preferably such that a pivot pin (58) attached to the (outer) support disc (45) is rotatably inserted in a centre recess (59) of the drive roll (33).

12. The apparatus as claimed in claim 1 or one of the further preceding claims, **characterized by** control elements at least at the entry side of the deflection subassembly (19) for the controlled transfer of packs to same, preferably with a pack brake (63) arranged at both sides of the movement path of the packs (10) for temporarily stopping the packs (10) transported by the feed conveyor (18), preferably before entering the region of the deflection subassembly.

13. The apparatus as claimed in claim 1 or one of the further preceding claims, **characterized by** lateral guide members for the packs (10) in the region of the deflection subassembly (19), in particular in the embodiment as segmented, plate-type lateral guides (39, 40) in the inlet and/or outlet region of the deflection subassembly (19), wherein the lateral guides (39, 40), preferably arranged at either side of the movement path of the packs (10), are connected to the supporting frame for the outer guide and are adjustable along with them

## Revendications

1. Dispositif de transport de paquets parallélépipédiques (10), destinés à des cigarettes, le long d'une trajectoire de déplacement incurvée, le dispositif comprenant une unité de déviation (19) destinée à dévier les paquets transportés (10) le long d'une trajectoire de déplacement partiellement circulaire, en particulier semi-circulaire ou en quart de cercle, et le dispositif comprenant un rouleau d'entraînement (33), les paquets (10) étant saisis au moins dans la zone de la déviation par une sangle intérieure (18, 65), en appui sur la circonférence du rouleau d'entraînement (33), sur une surface radialement intérieure du paquet (10) et par une sangle extérieure (25, 26 ; 66) sur une surface radialement extérieure du paquet (10) en vue du transport, et la sangle intérieure (18, 65) d'une part et la sangle extérieure (25, 26 ; 66) d'autre part étant en appui, dans la zone de déviation, sur des surfaces de support ou d'appui (34 ; 35, 36 ; 69, 70) en particulier circulaires ou partiellement circulaires, et les surfaces de support (34) destinées à la sangle intérieure (18, 65) d'une part et les surfaces d'appui (35, 36 ; 69, 70) destinées à la sangle extérieure (25, 26 ; 66) d'autre part étant disposées de manière décalée les unes des autres dans la direction radiale, c'est-à-dire selon les dimensions des paquets (10) dans la direction radiale, et la sangle intérieure (18, 65) étant en appui sur une surface radialement intérieure du paquet (10) et la sangle extérieure (25, 26 ; 66) étant en appui sur une surface radialement extérieure du paquet (10), au moins une bande transporteuse (30) servant de zone partielle libre, **caractérisé en ce que** la sangle extérieure (25, 26 ; 66) comprend deux sangles extérieures (25, 26 ; 67, 68) espacées axialement l'une de l'autre, **en ce que** les sangles extérieures (25, 26) servant de guide extérieur de l'unité de déviation (19) peuvent être déplacées entre une position de déviation, dans laquelle des paquets (10) peuvent être déviés le long de la trajectoire de déplacement incurvé, et une position d'introduction, dans laquelle des paquets (10) peuvent être introduits dans le processus de transport à partir d'une tour de réapprovisionnement (41) servant de réservoir de paquets, c'est à dire qu'elles peuvent être déplacées suivant un mouvement alternatif dans le sens de rotation de sorte que, dans la position d'introduction, les sangles extérieures (25, 26) soient sorties d'une zone de transfert des paquets (10) et amenées à un convoyeur d'évacuation (20) et les paquets (10) provenant de la tour de réapprovisionnement (41) puissent être déplacés librement devant l'unité de déviation (19), et **en ce qu'**un cadre de support, destiné aux sangles extérieures (25, 26) et pourvu de disques de support (45, 46) et d'une pièce de liaison (47) en tant qu'unité, est monté de manière rotative concentriquement au rouleau d'entraînement (33), les disques de support (45, 46) pouvant tourner indépendamment du rouleau d'entraînement (33).

2. Dispositif selon la revendication 1, **caractérisé en ce que** les surfaces de support ou d'appui destinées à la sangle intérieure (18, 65) et aux sangles extérieures (25, 26 ; 66) sont conçues sous la forme de surfaces circonférentielles de convoyeurs entraînés en rotation, en particulier sous la forme des surfaces périphériques d'un rouleau d'entraînement commun (33).

3. Dispositif selon la revendication 1 ou 2, **caractérisé en ce que** le rouleau d'entraînement (33), de préférence commun, servant d'élément de déviation, comporte des surfaces de support ou d'appui destinées à la sangle intérieure (18, 65) et aux sangles extérieures (25, 26 ; 66) et disposées de manière décalée les unes des autres aussi bien dans la direction axiale que dans la direction radiale, en particulier un rouleau intérieur (34) pourvu d'une surface d'appui, de préférence à peu près centrale, destinée à la sangle intérieure (18, 65) et de disques extérieurs (35, 36 ; 69, 70) décalés dans la direction axiale et pourvus de surfaces d'appui destinées aux sangles extérieures (25, 26 ; 67, 68), une sangle (25, 26 ; 67, 68) étant de préférence associée à chaque disque extérieur (35, 36 ; 69, 70).

4. Dispositif selon la revendication 3 ou l'une des autres revendications précédentes, **caractérisé en ce que** les sangles extérieures (25, 26) sont en appui, au niveau de zones partielles, sur les surfaces d'appui des disques extérieurs (35, 36 ; 69, 70) et sont en appui, au niveau de moyens saillant des surfaces de contact, à savoir au niveau d'une bande transporteuse (30), sur une zone, de préférence d'extrémité ou de bord, de la surface radialement extérieure du paquet (10) et sont en appui, au niveau d'une bande d'entraînement (31), sur le disque extérieur associé (35, 36 ; 69, 70) .

5. Dispositif selon la revendication 1 ou l'une des autres revendications précédentes, **caractérisé en ce que** les paquets de cigarettes parallélépipédiques, en particulier du type à boîte repliable, sont orientés transversalement à la direction de transport de telle sorte que la surface frontale (15) et la surface inférieure (16) soient orientées latéralement et que des côtés de paquet de grande surface, en particulier le côté avant (11) et le côté arrière (12), soient en appui sur la sangle intérieure (18, 65) et les sangles extérieures (25, 26 ; 66) en tant qu'éléments de transport, notamment de telle sorte que le côté avant (11) soit en appui sur la sangle intérieure (18, 65) et le côté arrière (12) soit en appui sur les sangles extérieures (25, 26 ; 66), en particulier des zones de bord des sangles (25, 26 ; 67, 68) étant dirigées vers la surface frontale (15) d'une part et la surface inférieure (16) d'autre part.

6. Dispositif selon la revendication 1 ou l'une des autres revendications précédentes, **caractérisé par** les caractéristiques suivantes :
a) la déviation de la bande transporteuse destinée aux paquets (10) est inférieure à 180°, en particulier est de 90°,
b) une section horizontale de transport des paquets (10) est déviée en une section de transport verticale ou dressée par l'unité de déviation (19),
c) des éléments de transport intérieurs s'enroulent autour de l'unité de déviation (19) ou du rouleau de déviation (24) dans une zone qui est de préférence supérieure à 180°, de sorte qu'un brin de transport (71) de la sangle intérieure (65) en tant qu'élément de transport des paquets (10) agit dans une direction dressée,
d) un élément transporteur à action externe, en particulier une sangle extérieure (66) pourvue de deux parties de sangle (67, 68) espacées l'une de l'autre, forme une branche horizontale (80) dans la zone de l'unité de déviation (19) et une section de transport verticale se raccordant à l'unité de déviation (19) ou au rouleau de déviation (24), des brins de transport de la sangle extérieure (66) ou des parties de sangle (67, 68) d'une part et le brin de transport (71) d'autre part étant guidés dans la zone de la section de transport verticale en étant espacés d'une distance correspondant à la dimension des paquets (10) de telle sorte que les brins de transport (71, 72) sont en appui sur les paquets (10) de préférence sous contrainte.

7. Dispositif selon la revendication 6 ou l'une des autres revendications précédentes, **caractérisé en ce qu'**un brin de transport vertical ou dressé d'au moins la sangle extérieure (66) se termine, dans la zone d'un rouleau de déviation, de préférence, avec des parties de rouleau (78, 79) destinées à chaque partie de sangle (67, 68) de la sangle extérieure (66) et **en ce que** la sangle intérieure (65) se prolonge de préférence au-delà de la zone de déviation de la sangle extérieure (66) et coopère de préférence avec un convoyeur de paquet (dressé) (77) qui se raccorde à la sangle extérieure (66) dans la zone de déviation, en particulier au moyen d'un rouleau de déviation (76).

8. Dispositif selon la revendication 1 ou l'une des autres revendications précédentes, **caractérisé en ce que** le guide extérieur de l'unité de déviation (19), en particulier les rouleaux de déviation (27, 28, 29) des sangles extérieures (25) sont disposés sur un cadre de support de préférence commun, de préférence les rouleaux de déviation (27, 28, 29) étant montés du côté intérieur sur des disques de support disposés de part et d'autre à l'extérieur, c'est-à-dire sur des disques extérieurs (35, 36), qui peuvent de préférence être déplacés conjointement entre la position de déviation et la position d'introduction, notamment au moyen d'un cylindre de commande (48).

9. Dispositif selon la revendication 1 ou l'une des autres revendications précédentes, **caractérisé en ce que** les sangles extérieures (25, 26) de l'unité de déviation (19) peuvent être déplacés pour la position d'introduction par un mouvement de rotation, de préférence dans le sens antihoraire, de sorte que les sangles extérieures (25, 26) soient complètement sorties de la zone de transport du convoyeur d'évacuation (20), en particulier le rouleau de déviation (28) étant positionné à une distance au-dessus de la trajectoire de déplacement des paquets (10) sur le convoyeur d'évacuation (20).

10. Dispositif selon la revendication 1 ou l'une des autres revendications précédentes, **caractérisé en ce que** les positions d'extrémité respectives des sangles extérieures (25, 26) sont déterminées dans la position de déviation d'une part et dans la position d'introduction d'autre part par des butées, de préférence par des amortisseurs fixes (50, 51), sur chacun desquels est fixée une butée (52) reliée aux sangles extérieures (25, 26) ou au cadre de support (45, 46, 47) .

11. Dispositif selon la revendication 1 ou l'une des autres revendications précédentes, **caractérisé par** un élément de support côté machine destiné à l'unité de déviation (19), en particulier une plaque de support (53) qui comporte un palier principal (54) destiné à un arbre d'entraînement (55) du rouleau d'entraînement (33), le cadre de support (45, 46, 47) destiné au guide extérieur est relié à un élément de support rotatif, en particulier un moyeu (57), de manière rotative conjointement avec la plaque de support (53), en particulier au niveau d'un manchon cylindrique du palier principal (54), de préférence le cadre de support destiné au guide extérieur étant relié de manière rotative au rouleau d'entraînement (33) ou à l'arbre d'entraînement (55), de préférence de telle manière qu'un axe de pivotement (58) fixé au disque de support (extérieur) (45) entre en rotation dans un évidement central (59) du rouleau d'entraînement (33).

12. Dispositif selon la revendication 1 ou l'une des autres revendications précédentes, **caractérisé par** des éléments de commande situés au moins du côté entrée de l'unité de déviation (19) et destinés au transfert commandé de paquets (10) vers celle-ci, de préférence un frein de paquet (63) étant disposé des deux côtés de la trajectoire de déplacement des paquets (10) et destiné à arrêter temporairement les paquets (10) transportés par le convoyeur d'alimentation (18), de préférence avant d'entrer dans la zone de l'unité de déviation.

13. Dispositif selon la revendication 1 ou l'une des autres revendications précédentes, **caractérisé par** des éléments latéraux de guidage de paquets (10) dans la zone de l'unité de déviation (19), en particulier sous la forme de guides latéraux (39, 40) de type segments, en forme de plaque dans la zone d'entrée et/ou de sortie de l'unité de déviation (19), les guides latéraux (39, 40), qui sont de préférence disposés des deux côtés de la trajectoire de déplacement des paquets (10), étant reliés au cadre de support destiné au guide extérieur et étant déplaçables conjointement avec ceux-ci .
